# EUROPEAN PATENT APPLICATION

(11) **EP 4 793 434 A1**
(43) Date of publication of application: **19.08.2026**
(21) Application number: 24912294.6
(22) Date of filing: 06.12.2024
(51) Int. Cl.: E02F 9/00, B60L 15/00

(54) **WORK MACHINE AND ELECTRIC POWER TRAIN UNIT FOR WORK MACHINE**

(30) Priority: 28.12.2023 JP 2023223043
(71) Applicant: Komatsu Ltd., Tokyo 105-8316 (JP)
(72) Inventor: TAKASE, Yuki, Tokyo 105-8316 (JP); KAMEKURA, Hirotaka, Tokyo 105-8316 (JP)
(74) Representative: Flügel Preissner Schober Seidel
(86) International application number: PCT/JP2024/043280
(87) International publication number: WO 2025/142405

(57) **Abstract**

A work machine includes a vehicle body, a traveling device, a work implement, and an electric power train unit. The electric power train unit drives the traveling device and the work machine. The electric power train unit includes a transmission, a first electric motor for the traveling device, a bracket, and a second electric motor for the work implement. The transmission includes an input shaft, an output shaft, and a housing. The output shaft is connected to the traveling device. The housing accommodates the input shaft and the output shaft. The first electric motor includes a first output shaft and is attached to the housing. The first output shaft is connected to the input shaft. The bracket is attached to the housing. The second electric motor is attached to the bracket and supported by the housing via the bracket.

## Description

### Technical Field

The present disclosure relates to a work machine and an electric power train unit for a work machine.

### Background Art

Some work machines include a traveling device and a work implement. The traveling device includes, for example, a tire or a crawler track. As the traveling device is driven, the work machine travels. The work implement includes, for example, a work tool such as a bucket. As the work implement is driven, the work machine performs work such as excavation. In recent years, an electric motor has been used as a drive source for driving a traveling device and a work implement. For example, a work machine of PTL 1 includes a first electric motor for driving a traveling device and a second electric motor for driving a work implement.

### Citation List

### Patent Literature

PTL 1: JP2006-233843A

### Summary of Invention

### Technical Problem

In the above-described work machine, a large space for arranging the first electric motor and the second electric motor in the vehicle body is required. Therefore, the size of the vehicle body increases. Also, each of the structures for attaching the first electric motor and the second electric motor in the vehicle body is required. Therefore, it is preferable to appropriately arrange the first electric motor and the second electric motor. An object of the present disclosure is to downsize a vehicle body in a work machine including a plurality of electric motors.

### Solution to Problem

A work machine according to an aspect of the present disclosure includes a vehicle body, a traveling device, a work implement, and an electric power train unit. The traveling device is attached to the vehicle body and causes the vehicle body to travel. The work implement is movably connected to the vehicle body. The electric power train unit drives the traveling device and the work machine. The electric power train unit includes a transmission, a first electric motor for the traveling device, a bracket, and a second electric motor for the work implement. The transmission includes an input shaft, an output shaft, and a housing. The output shaft is connected to the traveling device. The housing accommodates the input shaft and the output shaft. The first electric motor includes a first output shaft and is attached to the housing. The first output shaft is connected to the input shaft. The bracket is attached to the housing. The second electric motor is attached to the bracket and supported by the housing via the bracket.

An electric power train unit for a work machine according to another aspect of the present disclosure includes a transmission, a first electric motor, a bracket, a second electric motor, and a hydraulic pump. The transmission includes an input shaft, an output shaft, and a housing. The housing accommodates the input shaft and the output shaft. The first electric motor includes a first output shaft and is attached to the housing. The first output shaft is connected to the input shaft. The bracket is attached to the housing. The second electric motor includes a second output shaft, is attached to the bracket, and is supported by the housing via the bracket. The hydraulic pump is connected to the second output shaft.

### Advantageous Effects of Invention

According to the present disclosure, the first electric motor is attached to the housing of the transmission, and the second electric motor is attached to the housing of the transmission via the bracket. Thus, the first electric motor, the second electric motor, and the transmission are unitized as the electric power train unit. Therefore, the first electric motor and the second electric motor can be arranged compactly. Also, each of the structures for attaching the first electric motor and the second electric motor in the vehicle body is not required, or is downsized. Thus, the vehicle body of the work machine can be downsized.

### Brief Description of Drawings

[FIG. 1] FIG. 1 is a side view of a work machine according to an embodiment.
[FIG. 2] FIG. 2 is a block diagram showing the configuration of a drive system installed in the work machine.
[FIG. 3] FIG. 3 is a perspective view of an electric power train unit.
[FIG. 4] FIG. 4 is a side view of the electric power train unit.
[FIG. 5] FIG. 5 is a top view of the electric power train unit.
[FIG. 6] FIG. 6 is an exploded perspective view of the electric power train unit.
[FIG. 7] FIG. 7 is a perspective view of a transmission and a motor bracket.
[FIG. 8] FIG. 8 is a perspective view of the transmission and the motor bracket.
[FIG. 9] FIG. 9 is a back view of the transmission and the motor bracket.
[FIG. 10] FIG. 10 is a side view showing the electric power train unit installed in a vehicle body.
[FIG. 11] FIG. 11 is a top view showing the electric power train unit installed in the vehicle body.
[FIG. 12] FIG. 12 is a front view showing the electric power train unit installed in the vehicle body.
[FIG. 13] FIG. 13 is a top view showing an electric power train unit installed in a vehicle body according to a modification example.
[FIG. 14] FIG. 14 is a perspective view of the electric power train unit according to the modification example.

### Description of Embodiments

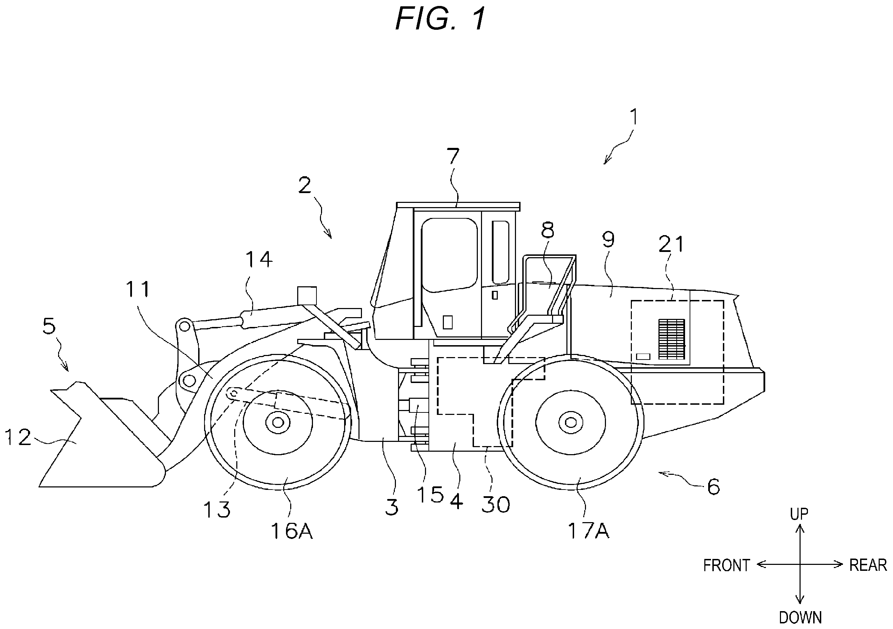

An embodiment of the present invention will be described below with reference to the drawings. FIG. 1 is a side view of a work machine 1 according to an embodiment of the present disclosure. The work machine 1 according to the present embodiment is an electric wheel loader. As shown in FIG. 1, the work machine 1 includes a vehicle body 2, a work implement 5, and a traveling device 6.

The vehicle body 2 includes a front vehicle body 3 and a rear vehicle body 4. The rear vehicle body 4 is connected to the front vehicle body 3 so as to be able to turn left and right. A cab 7, a hydraulic oil tank 8, and a power compartment 9 are disposed in the rear vehicle body 4. The hydraulic oil tank 8 is disposed to the rear of the cab 7. The power compartment 9 is disposed to the rear of the hydraulic oil tank 8. A steering cylinder 15 is coupled to the front vehicle body 3 and the rear vehicle body 4. The steering cylinder 15 is a hydraulic cylinder. As the steering cylinder 15 extends and retracts, the front vehicle body 3 turns left and right in relation to the rear vehicle body 4.

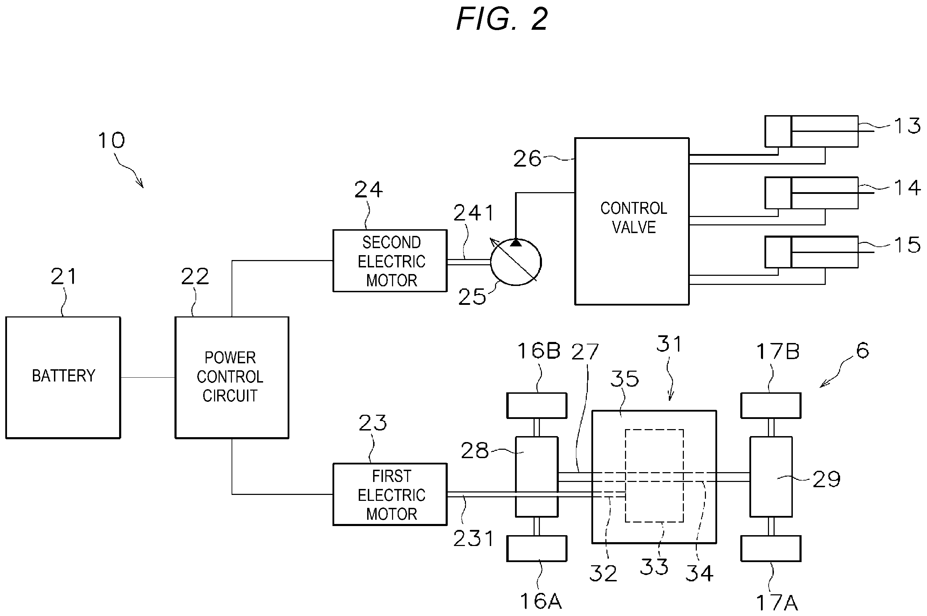

The traveling device 6 is attached to the vehicle body 2. The traveling device 6 causes the work machine 1 to travel. FIG. 2 is a block diagram showing the configuration of a drive system 10 installed in the work machine 1. As shown in FIGS. 1 and 2, the traveling device 6 includes front wheels 16A, 16B and rear wheels 17A, 17B. The front wheels 16A, 16B are rotatably supported by the front vehicle body 3. The rear wheels 17A, 17B are rotatably supported by the rear vehicle body 4.

The work implement 5 is movably connected to the vehicle body 2. The work implement 5 is used for work such as excavation. The work implement 5 is attached to the front vehicle body 3. The work implement 5 includes a boom 11, a bucket 12, a boom cylinder 13, and a bucket cylinder 14. The boom cylinder 13 and the bucket cylinder 14 are hydraulic cylinders. As the boom cylinder 13 extends and retracts, the boom 11 operates. As the bucket cylinder 14 extends and retracts, the bucket 12 operates.

As shown in FIG. 2, the drive system 10 includes a battery 21, a power control circuit 22, a first electric motor 23, and a second electric motor 24. The first electric motor 23 includes a first output shaft 231. The second electric motor 24 includes a second output shaft 241. The battery 21 supplies electric power to the first electric motor 23 and the second electric motor 24. As shown in FIG. 1, the battery 21 is disposed in the power compartment 9.

The power control circuit 22 controls the electric power supplied to the first electric motor 23 and the second electric motor 24. The power control circuit 22 includes, for example, an inverter. The first electric motor 23 generates a driving force for driving the traveling device 6. The second electric motor 24 generates a driving force for driving the work implement 5.

The drive system 10 includes a hydraulic pump 25 and a control valve 26. The hydraulic pump 25 is a variable displacement hydraulic pump. The hydraulic pump 25 is connected to the second output shaft 241 of the second electric motor 24. The hydraulic pump 25 is driven by the second electric motor 24 and thus supplies hydraulic oil to the above-described hydraulic cylinders 13 to 15. The control valve 26 is connected to the hydraulic pump 25 and the hydraulic cylinders 13 to 15 via a hydraulic circuit. The control valve 26 includes a plurality of valves. The control valve 26 controls the flow rate of the hydraulic oil supplied from the hydraulic pump 25 to the hydraulic cylinders 13 to 15.

The above-described traveling device 6 includes a drive shaft 27, a front axle 28, and a rear axle 29. The drive shaft 27 is connected to the front axle 28 and the rear axle 29. The front wheels 16A, 16B are connected to the drive shaft 27 via the front axle 28. The rear wheels 17A, 17B are connected to the drive shaft 27 via the rear axle 29.

The drive system 10 includes a transmission 31. The transmission 31 includes an input shaft 32, a transmission gear set 33, and an output shaft 34. The input shaft 32 of the transmission 31 is connected to the first output shaft 231 of the first electric motor 23. The transmission gear set 33 includes a plurality of transmission gears and is connected to the input shaft 32 and the output shaft 34. The output shaft 34 of the transmission 31 is connected to the drive shaft 27 of the traveling device 6. The transmission 31 changes the speed of the driving force from the first electric motor 23 and transmits the driving force to the traveling device 6.

In the work machine 1 according to the present embodiment, the transmission 31, the first electric motor 23, the second electric motor 24, and the hydraulic pump 25, described above, are integrated with each other as an electric power train unit 30. As shown in FIG. 1, the electric power train unit 30 is installed in the vehicle body 2. The electric power train unit 30 is disposed below the cab 7.

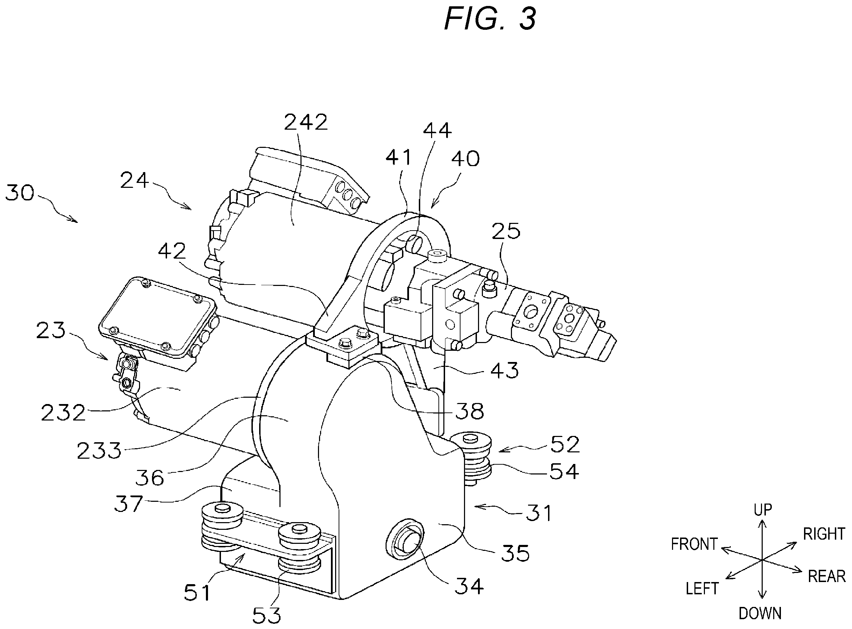

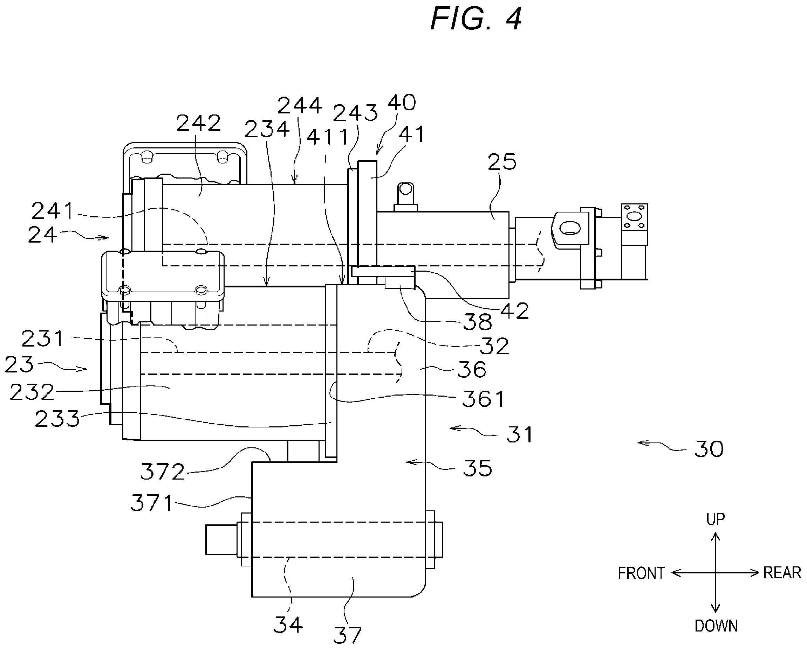

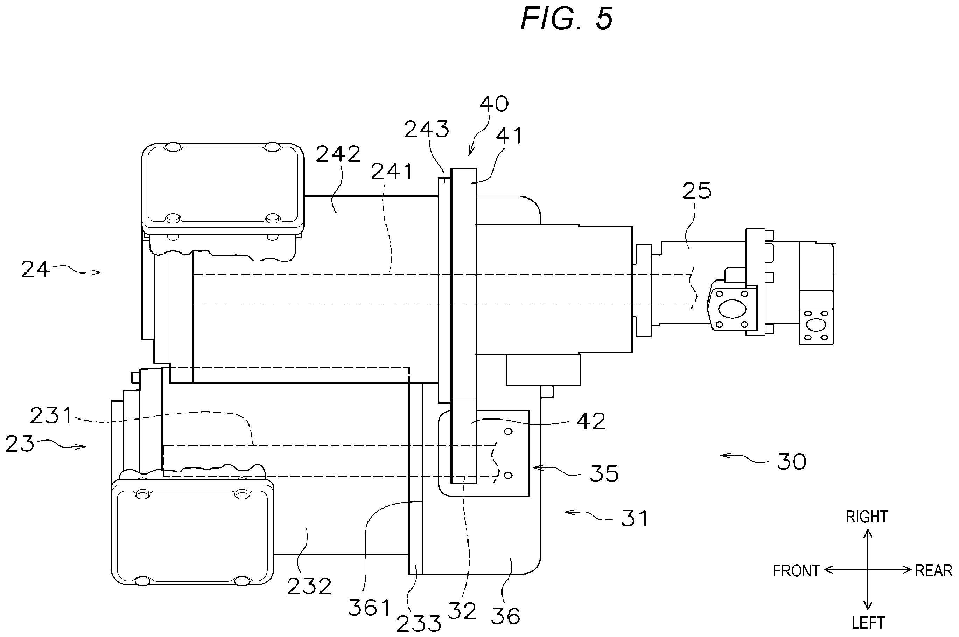

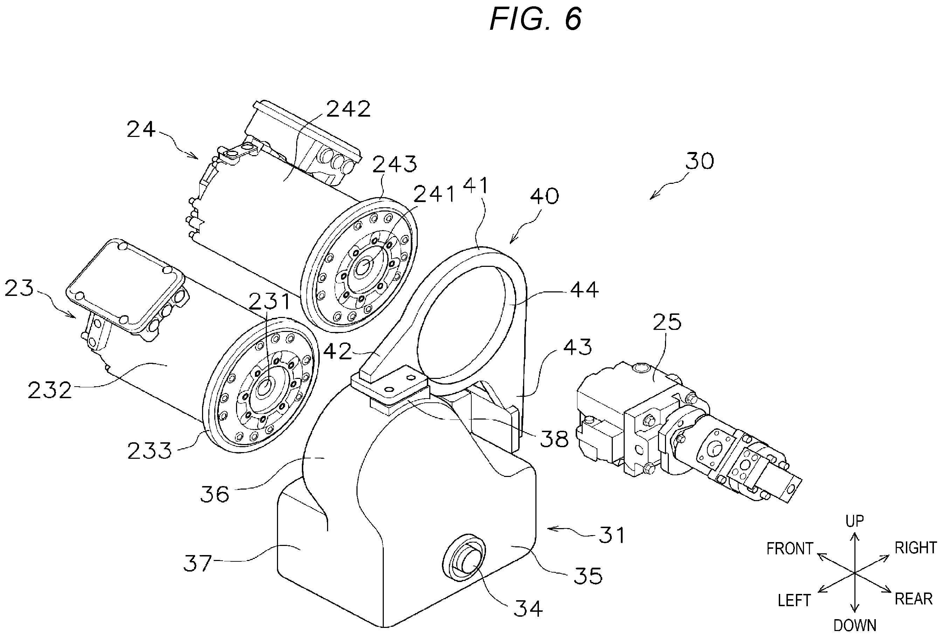

FIG. 3 is a perspective view of the electric power train unit 30. FIG. 4 is a side view of the electric power train unit 30. FIG. 5 is a top view of the electric power train unit 30. FIG. 6 is an exploded perspective view of the electric power train unit 30. As shown in FIGS. 3 to 6, the transmission 31 includes a transmission housing 35. The transmission housing 35 accommodates the input shaft 32, the output shaft 34, and the transmission gear set 33, described above.

The transmission housing 35 includes an upper housing part 36 and a lower housing part 37. As shown in FIG. 3, the input shaft 32 is disposed in the upper housing part 36. The output shaft 34 is disposed in the lower housing part 37. The upper housing part 36 is smaller than the lower housing part 37 in a vehicle front-rear direction. A front surface 361 of the upper housing part 36 is located to the rear of a front surface 371 of the lower housing part 37. The lower housing part 37 includes an upper surface 372. The upper surface 372 of the lower housing part 37 extends forward from the front surface 361 of the upper housing part 36.

The first electric motor 23 includes a first motor housing 232. The first motor housing 232 accommodates the first output shaft 231. The first electric motor 23 is attached to the transmission housing 35. The first electric motor 23 is attached to the front surface 361 of the upper housing part 36. The first motor housing 232 includes a first motor fixing part 233. The first motor housing 232 is fixed to the transmission housing 35 at the first motor fixing part 233. The first motor fixing part 233 has a flange shape. The first motor fixing part 233 is fixed to the transmission housing 35, for example, with a fixing member such as a bolt.

The electric power train unit 30 includes a motor bracket 40. The motor bracket 40 is separate from the transmission 31 and the second electric motor 24. The motor bracket 40 is attached to the transmission housing 35. The motor bracket 40 is detachably attached to the transmission housing 35, for example, with a fixing member such as a bolt. The second electric motor 24 is attached to the motor bracket 40. The second electric motor 24 is supported by the transmission housing 35 via the motor bracket 40.

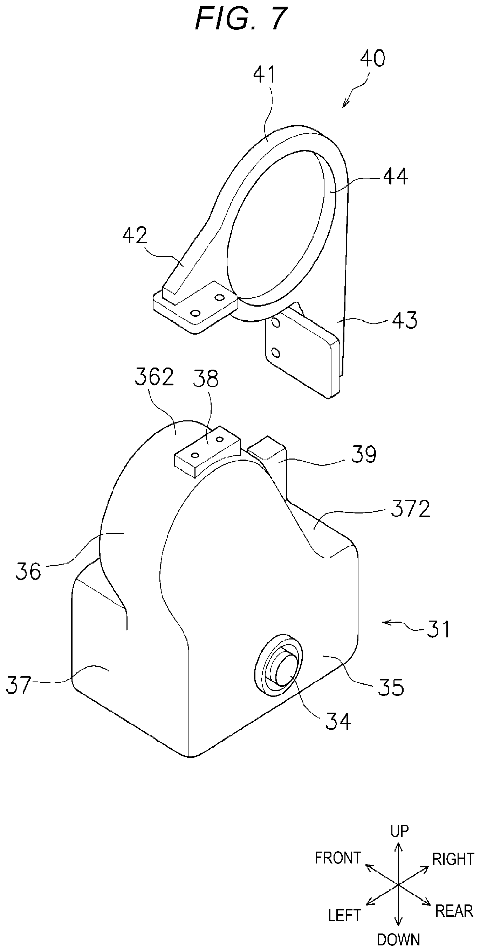

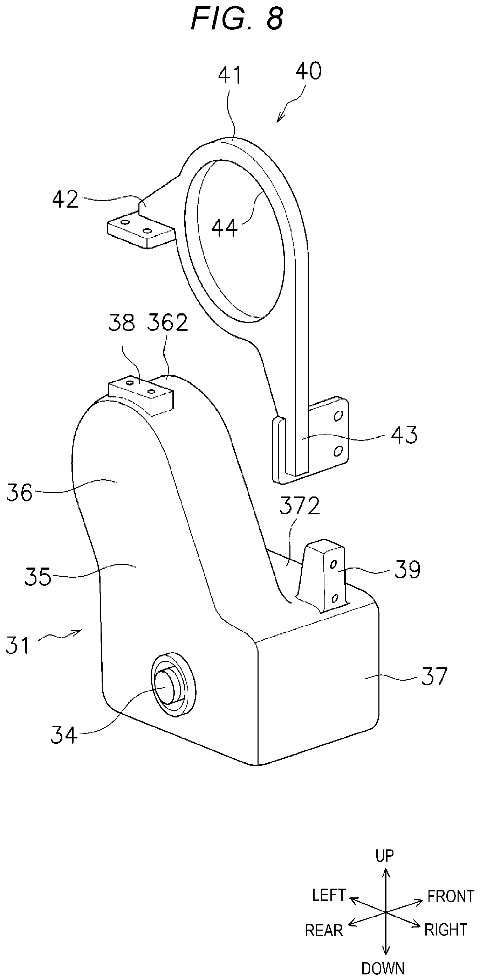

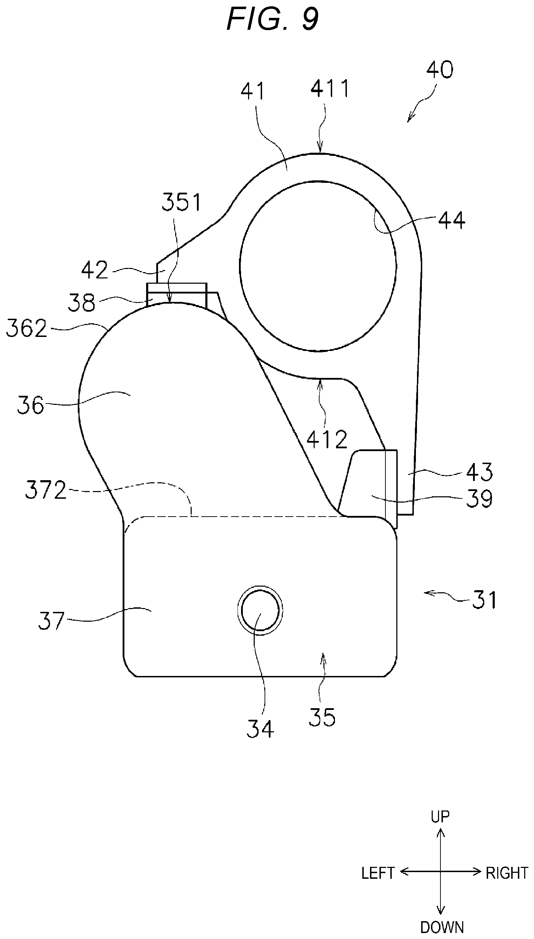

FIGS. 7 and 8 are perspective views of the transmission 31 and the motor bracket 40. FIG. 9 is a back view of the transmission 31 and the motor bracket 40. As shown in FIGS. 7 to 9, the motor bracket 40 includes a bracket body 41, a first bracket fixing part 42, and a second bracket fixing part 43.

The bracket body 41 is a part to which the second electric motor 24 is attached. The bracket body 41 has a plate shape. The bracket body 41 has a substantially circular shape. As shown in FIG. 9, an upper end 411 of the bracket body 41 is located above an upper end 351 of the transmission housing 35. A lower end 412 of the bracket body 41 is located below the upper end 351 of the transmission housing 35. The bracket body 41 includes an opening 44. The opening 44 penetrates the bracket body 41 in the vehicle front-rear direction.

The first bracket fixing part 42 and the second bracket fixing part 43 are connected to the bracket body 41. The first bracket fixing part 42 extends laterally from the bracket body 41. The second bracket fixing part 43 extends downward from the bracket body 41. The motor bracket 40 is fixed to the transmission housing 35 at the first bracket fixing part 42 and the second bracket fixing part 43.

The transmission housing 35 includes a first transmission fixing part 38 and a second transmission fixing part 39. The first transmission fixing part 38 is connected to the upper housing part 36. As shown in FIGS. 7 and 9, the first transmission fixing part 38 is disposed on an upper surface 362 of the upper housing part 36. The first bracket fixing part 42 is fixed to the first transmission fixing part 38. The second transmission fixing part 39 is connected to the lower housing part 37. The second transmission fixing part 39 is disposed on the upper surface 372 of the lower housing part 37. The second bracket fixing part 43 is fixed to the second transmission fixing part 39.

The second electric motor 24 includes a second motor housing 242. The second motor housing 242 accommodates the second output shaft 241. The second electric motor 24 is detachably attached to the bracket body 41. The second electric motor 24 is attached to the bracket body 41 from the front of the bracket body 41. The second motor housing 242 includes a second motor fixing part 243. The second motor fixing part 243 has a flange shape. The second motor housing 242 is fixed to the transmission housing 35 at the second motor fixing part 243. The second motor fixing part 243 is fixed to the transmission housing 35, for example, with a fixing member such as a bolt.

As shown in FIGS. 4 and 5, in the electric power train unit 30, the first electric motor 23 is attached to the transmission housing 35 and the second electric motor 24 is attached to the transmission housing 35 via the motor bracket 40 such that the first output shaft 231 and the second output shaft 241 are arranged in parallel with each other.

The hydraulic pump 25 is attached to the second electric motor 24. The hydraulic pump 25 is not attached to the motor bracket 40 and is supported by the motor bracket 40 via the second electric motor 24. However, the hydraulic pump 25 may be attached to the motor bracket 40.

The hydraulic pump 25 is disposed coaxially with the second electric motor 24. The motor bracket 40 is disposed between the hydraulic pump 25 and the second electric motor 24. The hydraulic pump 25 and the second electric motor 24 are provided through the opening 44. The hydraulic pump 25 is disposed to the rear of the motor bracket 40. The second electric motor 24 is disposed to the front of the motor bracket 40.

The second electric motor 24 is disposed on the same side as the first electric motor 23 with respect to the transmission 31 in the vehicle front-rear direction. The hydraulic pump 25 is disposed on the side opposite to the first electric motor 23 and the second electric motor 24 with respect to the transmission 31 in the vehicle front-rear direction. That is, the first electric motor 23 and the second electric motor 24 are disposed to the front of the transmission 31. The hydraulic pump 25 is disposed to the rear of the transmission 31.

The first electric motor 23 and the second electric motor 24 are disposed close to each other. As shown in FIG. 4, when viewed in a vehicle side view, the first electric motor 23 and the second electric motor 24 are arranged, lined up in the up-down direction. When viewed in a vehicle side view, an upper surface 244 of the second electric motor 24 is located above an upper surface 234 of the first electric motor 23. When viewed in a vehicle side view, the first electric motor 23 and the second electric motor 24 at least partially overlap each other. As shown in FIG. 5, when viewed in a vehicle top view, the first electric motor 23 and the second electric motor 24 are arranged, lined up in the left-right direction. When viewed in a vehicle top view, the first electric motor 23 and the second electric motor 24 at least partially overlap each other.

As shown in FIG. 3, the electric power train unit 30 is attached to the vehicle body 2 via mount brackets 51, 52. The mount brackets 51, 52 are attached to the transmission housing 35. The mount brackets 51, 52 include mount members 53, 54 made of an elastic body. The electric power train unit 30 is supported by the vehicle body 2 via the mount members 53, 54.

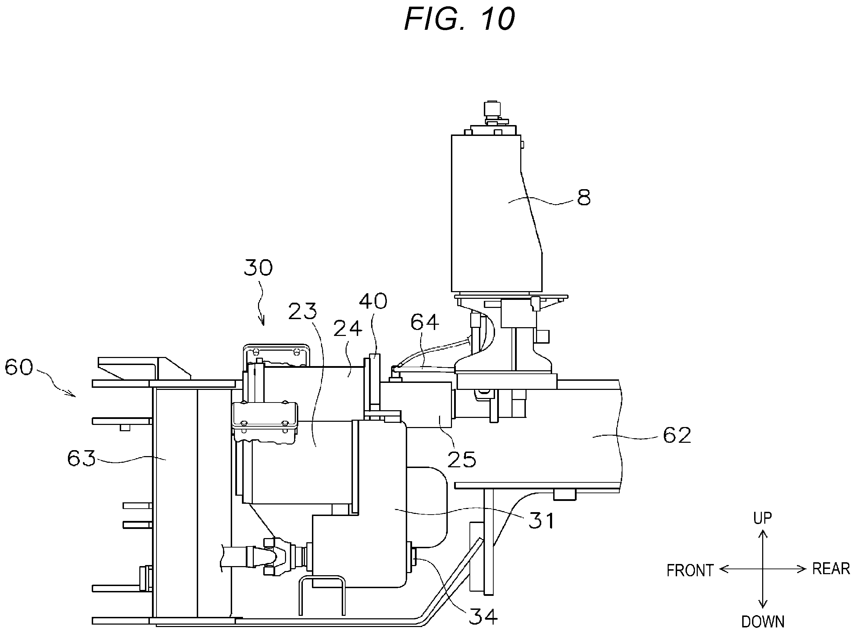

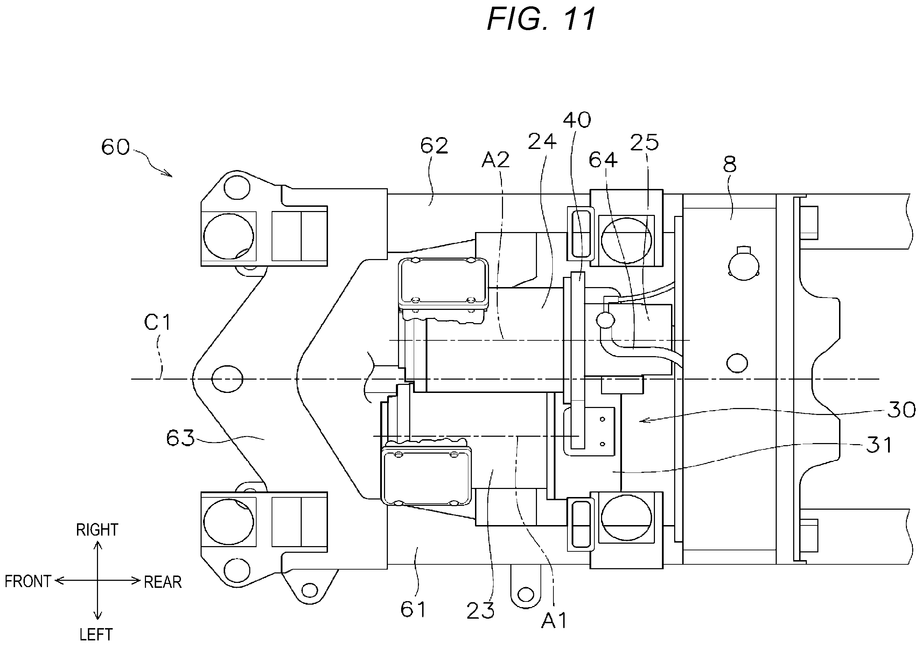

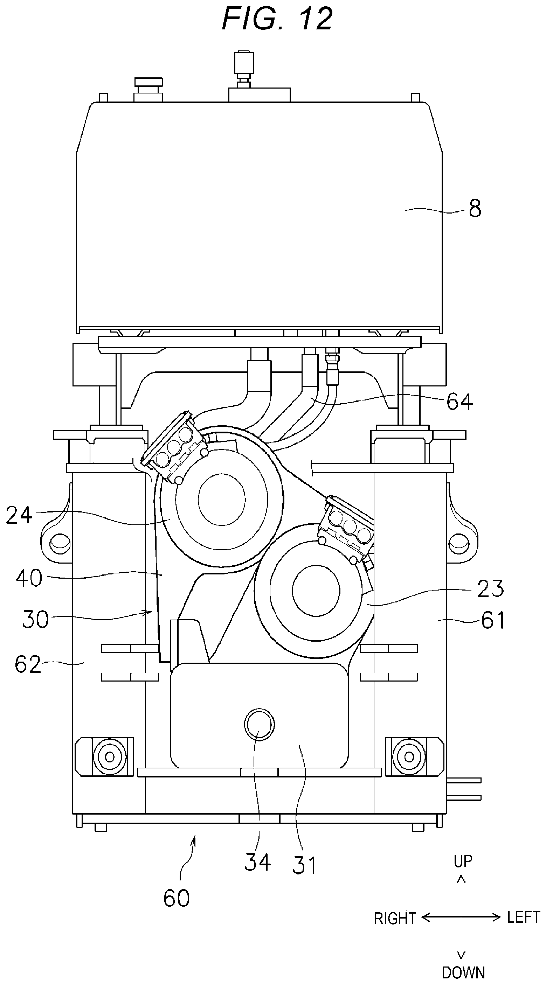

FIG. 10 is a side view showing the electric power train unit 30 installed in the vehicle body 2. FIG. 11 is a top view showing the electric power train unit 30 installed in the vehicle body 2. FIG. 12 is a front view showing the electric power train unit 30 installed in the vehicle body 2. As shown in FIGS. 10 to 12, the vehicle body 2 includes a vehicle body frame 60. The electric power train unit 30 is supported by the vehicle body frame 60. In FIGS. 10 to 12, a part of the vehicle body frame 60 is omitted to facilitate understanding.

As shown in FIGS. 10 to 12, the vehicle body frame 60 includes a first side frame 61, a second side frame 62, and a cross frame 63. The first side frame 61 and the second side frame 62 extend in the vehicle front-rear direction. The first side frame 61 and the second side frame 62 are disposed apart from each other in the vehicle left-right direction. The cross frame 63 extends in the vehicle left-right direction. The cross frame 63 is connected to the first side frame 61 and the second side frame 62.

The electric power train unit 30 is disposed between the first side frame 61 and the second side frame 62. As shown in FIG. 11, when viewed in a vehicle top view, at least a part of the first electric motor 23 is disposed on one side of a center line C1 of the vehicle body 2 extending in the front-rear direction of the work machine 1. When viewed in a vehicle top view, at least a part of the second electric motor 24 is disposed on the other side of the center line C1 of the vehicle body 2 extending in the front-rear direction of the work machine 1. In the present embodiment, when viewed in a vehicle top view, at least a part of the first electric motor 23 is disposed on the left side of the center line C1 of the vehicle body 2 extending in the front-rear direction of the work machine 1. When viewed in a vehicle top view, at least a part of the second electric motor 24 is disposed on the right side of a center line C1 of the vehicle body 2 extending in the front-rear direction of the work machine 1.

When viewed in a vehicle top view, a central axis A1 of the first electric motor 23 is disposed on one side of a center line C1 of the vehicle body 2 extending in the front-rear direction of the work machine 1. When viewed in a vehicle top view, a central axis A2 of the second electric motor 24 is disposed on the other side of the center line C1 of the vehicle body 2 extending in the front-rear direction of the work machine 1. In the present embodiment, when viewed in a vehicle top view, the central axis A1 of the first electric motor 23 is disposed on the left side of the center line C1 of the vehicle body 2 extending in the front-rear direction of the work machine 1. When viewed in a vehicle top view, the central axis A2 of the second electric motor 24 is disposed on the right side of a center line C1 of the vehicle body 2 extending in the front-rear direction of the work machine 1. However, the first electric motor 23 and the second electric motor 24 may be disposed with left and right replaced.

As shown in FIG. 10, the above-described hydraulic oil tank 8 is disposed above the first side frame 61 and the second side frame 62. The hydraulic oil tank 8 is disposed to the rear of the transmission 31. The hydraulic pump 25 is disposed below the hydraulic oil tank 8. The hydraulic pump 25 is connected to the hydraulic oil tank 8 via a hydraulic pipe 64.

In the work machine 1 according to the present embodiment described above, the first electric motor 23 is attached to the transmission housing 35, and the second electric motor 24 is attached to the transmission housing 35 via the motor bracket 40. Thus, the first electric motor 23, the second electric motor 24, and the transmission 31 are unitized as the electric power train unit 30. Therefore, the first electric motor 23 and the second electric motor 24 can be arranged compactly. Also, each of the structures for attaching the first electric motor 23 and the second electric motor 24 in the vehicle body 2 is not required, or is downsized. Thus, the vehicle body 2 of the work machine 1 can be downsized.

Further, the assemblability of the first electric motor 23, the second electric motor 24, and the transmission 31 to the vehicle body 2 is improved. For example, when the electric power train unit 30 is attached to the vehicle body 2, the first electric motor 23, the second electric motor 24, and the transmission 31 can be integrally attached to the vehicle body 2. Alternatively, when the electric power train unit 30 is detached from the vehicle body 2, the first electric motor 23, the second electric motor 24, and the transmission 31 can be integrally detached from the vehicle body 2.

Also, when the motor bracket 40 is detached from the transmission housing 35, the motor bracket 40, the second electric motor 24, and the hydraulic pump 25 can be integrally detached from the vehicle body 2. When the motor bracket 40 is attached to the transmission housing 35, the motor bracket 40, the second electric motor 24, and the hydraulic pump 25 can be integrally attached to the vehicle body 2. Thus, maintainability is improved.

While one embodiment of the present invention is described above, the present invention is not limited to the above-described embodiment and various modifications can be made without departing from the spirit and scope of the invention.

The work machine 1 is not limited to a wheel loader and may be another machine such as a bulldozer, a motor grader, or an excavator. The configuration of the work machine 1 is not limited to that of the above embodiment and may be changed. For example, the structure of the vehicle body frame 60 is not limited to that of the above embodiment and may be changed.

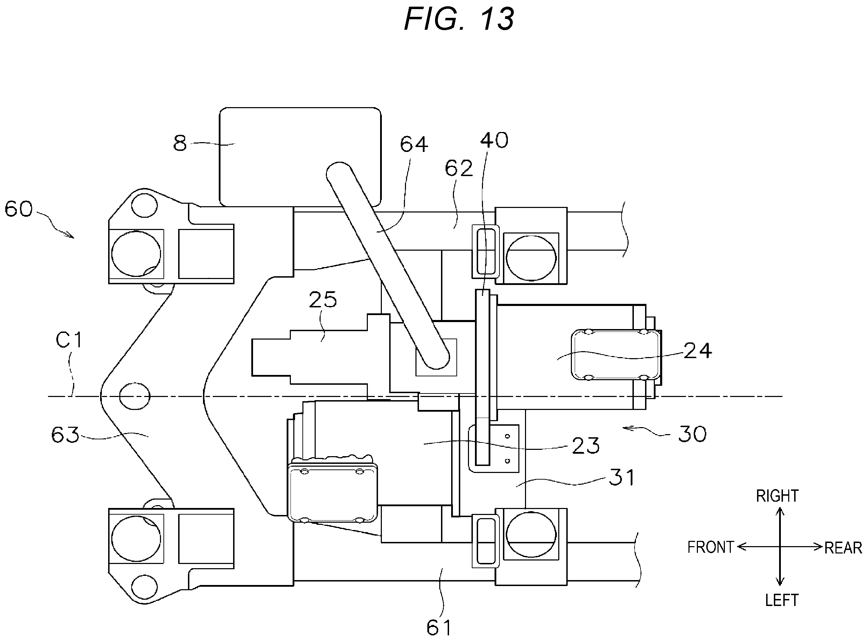

The arrangement of the hydraulic oil tank 8 is not limited to that in the above embodiment and may be changed. For example, as shown in FIG. 13, the hydraulic oil tank 8 may be disposed to the front of the transmission 31. In this case, the arrangement of the second electric motor 24 and the hydraulic pump 25 in the electric power train unit 30 may be changed according to the arrangement of the hydraulic oil tank 8.

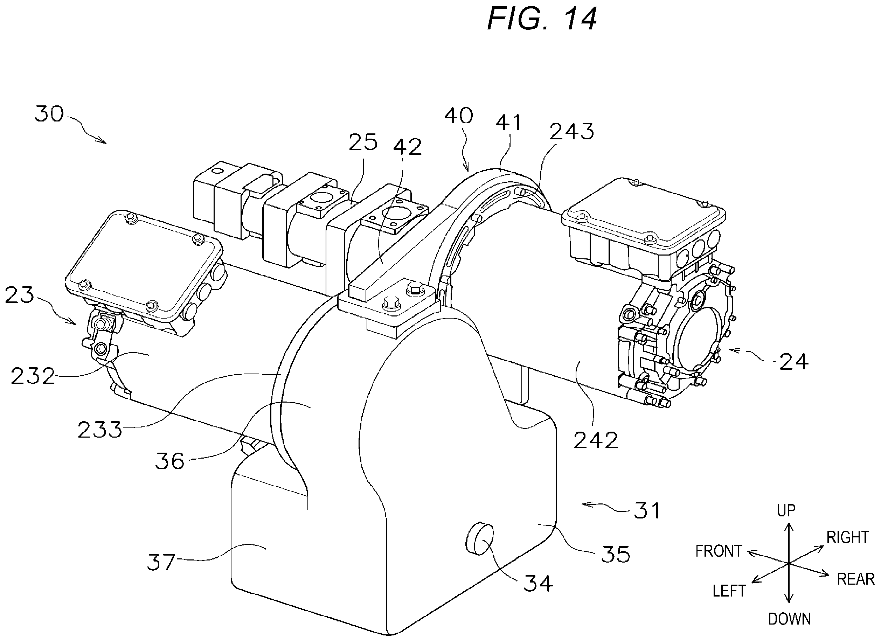

FIG. 14 is a perspective view showing the electric power train unit 30 according to a modification example. In the electric power train unit 30, the hydraulic pump 25 and the second electric motor 24 may be capable of being interchangeably disposed with respect to the motor bracket 40. For example, the second electric motor 24 may be attachable to the same motor bracket 40 both from the front and from the rear. Alternatively, the motor bracket 40 for attaching the second electric motor 24 from the front and the motor bracket 40 for attaching the second electric motor 24 from the rear may be selectively used.

As shown in FIGS. 13 and 14, in the electric power train unit 30 according to the modification example, the hydraulic pump 25 and the second electric motor 24 are arranged in the positions opposite to the positions in the above embodiment with respect to the motor bracket 40. That is, the second electric motor 24 is disposed to the rear of the motor bracket 40. The hydraulic pump 25 is disposed to the front of the motor bracket 40. Thus, the hydraulic pump 25 is disposed closer to the hydraulic oil tank 8 than when the hydraulic pump 25 is disposed to the rear of the motor bracket 40. Therefore, the hydraulic pipe 64 can be easily routed from the hydraulic oil tank 8 to the hydraulic pump 25.

The structure of the electric power train unit 30 is not limited to that of the above embodiment and may be changed. For example, the upper end 411 of the bracket body 41 may be located below the upper end 351 of the transmission housing 35. The shape of the bracket body 41 is not limited to a circular shape as in the above embodiment and may be another shape such as a polygonal shape.

The arrangement of the first electric motor 23 and the second electric motor 24 is not limited to that of the above embodiment and may be changed. For example, the first electric motor 23 and the second electric motor 24 may be arranged so as not to overlap each other, when viewed in a vehicle side view. The first electric motor 23 and the second electric motor 24 may be arranged so as not to overlap each other, when viewed in a vehicle top view. Another device such as a speed reducer may be added between the second electric motor 24 and the hydraulic pump 25.

### Industrial Applicability

According to the present disclosure, in a work machine including a plurality of electric motors, a vehicle body can be downsized.

### Reference Signs List

2: vehicle body
5: work implement
6: traveling device
23: first electric motor
24: second electric motor
25: hydraulic pump
30: electric power train unit
31: transmission
32: input shaft
34: output shaft
35: transmission housing
40: motor bracket
41: bracket body
42: first bracket fixing part
44: opening
53: mount member
231: first output shaft
241: second output shaft

## Claims

1. A work machine comprising:
a vehicle body;
a traveling device attached to the vehicle body and configured to cause the vehicle body to travel;
a work implement movably connected to the vehicle body; and
an electric power train unit configured to drive the traveling device and the work machine, wherein
the electric power train unit includes:
a transmission including an input shaft, an output shaft connected to the traveling device, and a housing that accommodates the input shaft and the output shaft;
a first electric motor for the traveling device, the first electric motor including a first output shaft connected to the input shaft and being attached to the housing;
a bracket attached to the housing; and
a second electric motor for the work implement, the second electric motor being attached to the bracket and supported by the housing via the bracket.

2. The work machine according to claim 1, wherein
the electric power train unit further includes a hydraulic pump that is driven by the second electric motor and thus discharges hydraulic oil for driving the work implement,
the second electric motor includes a second output shaft, and
the hydraulic pump is connected to the second output shaft and disposed coaxially with the second electric motor.

3. The work machine according to claim 2, wherein
the bracket is disposed between the hydraulic pump and the second electric motor.

4. The work machine according to claim 3, wherein
the bracket includes
a bracket body including an opening, and
a fixing part connected to the bracket body and fixed to the housing, and
the hydraulic pump and the second electric motor are provided through the opening.

5. The work machine according to claim 3, wherein
the hydraulic pump and the second electric motor are capable of being interchangeably disposed with respect to the bracket.

6. The work machine according to claim 1, wherein
the second electric motor includes a second output shaft, and
the first output shaft and the second output shaft are arranged in parallel with each other.

7. The work machine according to claim 1, wherein
at least a part of the first electric motor is disposed on one side of a center line of the vehicle body extending in a front-rear direction of the work machine, when viewed in a vehicle top view, and
at least a part of the second electric motor is disposed on the other side of the center line of the vehicle body extending in the front-rear direction of the work machine, when viewed in a vehicle top view.

8. The work machine according to claim 1, wherein
the first electric motor and the second electric motor at least partially overlap each other, when viewed in a vehicle top view.

9. The work machine according to claim 1, wherein
the first electric motor and the second electric motor at least partially overlap each other, when viewed in a vehicle side view.

10. The work machine according to claim 1, wherein
the bracket is detachably attached to the housing.

11. The work machine according to claim 1, wherein
the electric power train unit further includes a mount member made of an elastic body and attached to the housing, and
the electric power train unit is supported by the vehicle body via the mount member.

12. An electric power train unit for a work machine, the electric power train unit comprising:
a transmission including an input shaft, an output shaft, and a housing that accommodates the input shaft and the output shaft;
a first electric motor that includes a first output shaft connected to the input shaft and is attached to the housing;
a bracket attached to the housing;
a second electric motor that includes a second output shaft, is attached to the bracket, and is supported by the housing via the bracket; and
a hydraulic pump connected to the second output shaft.

13. The electric power train unit according to claim 12, wherein
the hydraulic pump is disposed coaxially with the second electric motor.

14. The electric power train unit according to claim 13, wherein
the bracket is disposed between the hydraulic pump and the second electric motor.

15. The electric power train unit according to claim 14, wherein
the bracket includes
a bracket body including an opening, and
a fixing part connected to the bracket body and fixed to the housing, and
the hydraulic pump and the second electric motor are provided through the opening.
